# EUROPEAN PATENT SPECIFICATION

(11) **EP 1 236 350 B1**
(45) Date of publication and mention of the grant of the patent: **11.08.2004**
(21) Application number: 00976797.1
(22) Date of filing: 01.11.2000
(51) Int. Cl.: H04N 5/92

(54) **Digital video recording with full screen sub-picture and associated transparency control data recording for effecting fading between successive video segments at reproduction**
Digitalvideo-Aufzeichnung mit Aufzeichnung von Vollbild-Unterbildern und diesen zugeordneten Transparenz-Steuerdaten zum Überblenden zwischen aufeinanderfolgenden Videosegmenten bei der Wiedergabe
Enregistrement de vidéo numérique avec enregistrement des sous-images de plein écran et des données associées de contrôle de transparence pour obtenir un fondu entre segments successifs de vidéo à la reproduction

(30) Priority: 10.11.1999 US 164791 P
(43) Date of publication of application: 04.09.2002
(73) Proprietor: Thomson Licensing S.A., 92648 Boulogne Cedex (FR)
(72) Inventor: LIN, Shu, Indianapolis, IN 46240 (US); SCHULTZ, Mark, Alan, Carmel, IN 46033 (US)
(74) Representative: Hartnack, Wolfgang, Dipl.-Ing.
(86) International application number: PCT/US2000/030111
(87) International publication number: WO 2001/035654

(56) References cited:
- EP-A- 0 586 248
- EP-A- 0 738 078
- EP-A- 0 755 161
- US-A- 5 003 404

## Description

### BACKGROUND OF THE INVENTION

### Technical Field

The inventive arrangements relate generally to methods and apparatus providing advanced operating features for audio only, video only and both video and audio programs recorded on disc media, for example recordable digital video discs, hard drives and magneto optical discs.

### Description of the Related Art

Various devices have been developed to enable consumers to record video and/or audio programs for later presentation. Such devices include tape recorders, video cassette recorders, recordable compact discs, and most recently, recordable digital video discs (DVD). Hard drives and magneto optical discs have also been used.

A DVD that can be recorded on only once, and thereafter is essentially a DVD read only memory, is referred to by the acronym DVD-R. The acronym DVD-R is also used generally to refer to the write-once, or record-once, technology. Several formats are available for DVD's to be recorded on, erased and re-recorded; that is, overwritten or rewritten. These are referred to by the acronyms DVD-RAM, DVD-RW and DVD + RW. As of this time no uniform industry standard has been adopted. The acronyms DVD-RAM, DVD-RW and DVD + RW are also used generally to refer to the respective rewritable technologies. Reference herein to rewritable DVD technology, devices and methods is generally intended to encompass all of the standards which are now being used, as well as those which may be developed in the future.

Although rewritable DVD technology is generally available, operation is limited to such basic functions as play, record, fast forward reverse and stop. Pause is available, but only as a counterpart to pause operation in a VCR, for example interrupting the play back of a prerecorded program or interrupting the recording of a viewed program to eliminate commercials from the recording. Unlike computer hard drives, recordable DVD devices have a very significant additional function, which is playing back pre-recorded DVDs. Thus, there is an economic incentive to develop rewritable DVD technology, including methods and devices, that can be used instead of a computer hard drive. It is a challenge to provide such devices with improved, advantageous features without compromising the goal of decreasing costs and increasing sales.
One feature which is important for recordable DVD is the ability for users to fade and mix pictures. Fading allows the image displayed for a video or still picture to slowly or rapidly fade in or fade out. Often, fading will be used at the beginning of a video segment, at the end of the segment or to transition from one segment to another. A fade effect generally involves completely fading out a video or still picture image before fading in the next video or image. By comparison, mixing can include a video or still picture fading out as another video or still picture concurrently fades in. Fading and mixing allows consumers to make high quality home video. For example, fading and mixing allows smooth transitions from one video segment to the next. Since fading and mixing capabilities are not directly available in current recordable DVD systems, it is desirable to provide cost effective ways to implement such features.

EP-A-0738078 discloses a recorder using optical storage media, in which video data together with subpicture data can be recorded and replayed.
EP-A-0755161 describes colour wiping of subtitles in an optical recorder, whereby an image is gradually overlayed with another image.
EP-A-0586248 teaches fade-in /fade-out of two video signals using several video tape recorders.

### Summary of the Invention

The invention concerns methods and apparatuses for providing a fade effect in an MPEG format recordable media device player. The methods are defined in appended claims 1 and 2, and the apparatuses are defined in appended claims 5 and 6.
According to one aspect of the invention a full screen subpicture is provided automatically in response to a user command to begin recording, pause recording, or stop recording.

### Brief Description of the Drawings

Fig. 1 is a block diagram of a rewritable DVD device that can be provided with one or more advanced operating features in accordance with the inventive arrangements.
Fig. 2 is a diagram useful for illustrating the spiral track on a rewritable DVD.
Fig. 3 is a diagram useful for explaining the organization of video object units in video object sets.
Fig. 4 is a diagram useful for explaining the structure of a subpicture pack.
Fig. 5 is a diagram useful for explaining a fade feature using subpictures.
Fig. 6 is a diagram useful for showing a fade occurring between two cells.
Fig. 7 is a diagram useful for showing a fade occurring within a cell.
Fig. 8 is a diagram showing the structure of a navigation pack incorporating a fade flag.

### Detailed Description of the Preferred Embodiments

### Recordable DVD Device

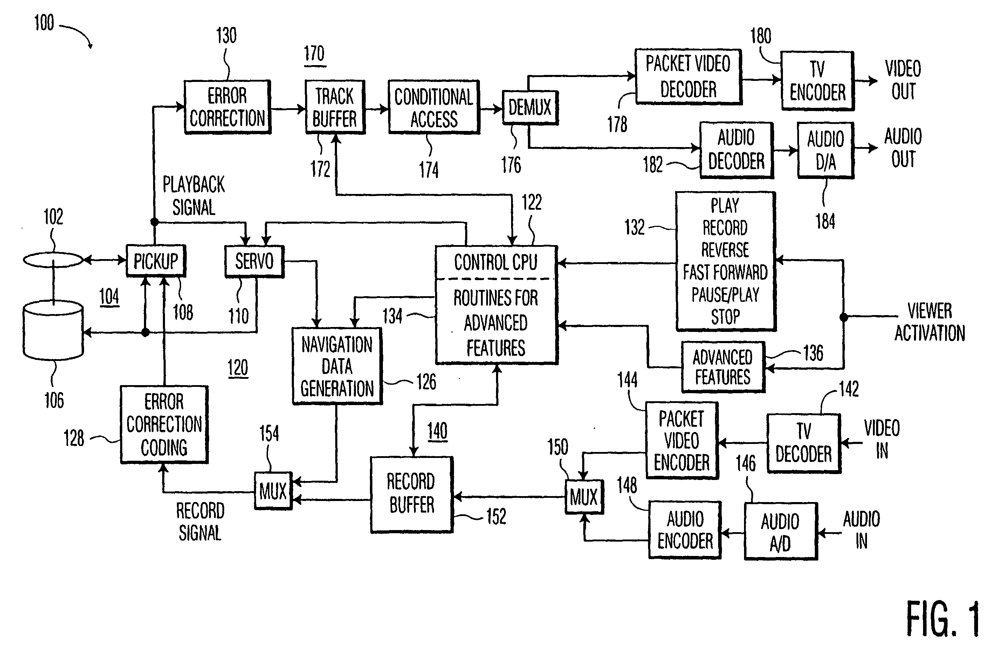

A device 100 for implementing the various advanced operating features in accordance with the inventive arrangements taught herein utilizes a rewritable disc medium 102 in accordance with the inventive arrangements is shown in block diagram form in Fig. 1. The rewritable disc medium 102 is embodied as a rewritable DVD in the illustrated embodiment. In many instances, as will be noted, the rewritable disc medium can also be, for example, a hard drive or a magneto optical disc (MOD). An example of a MOD is a mini-disc. In many instances, the inventive arrangements are applicable to video or audio or both video and audio.

The device 100 is capable of writing onto and reading from the disc medium, in this example, a rewritable DVD 102. The device comprises a mechanical assembly 104, a control section 120, a video/audio input processing path 140 and a video/audio output processing path 170. The allocation of most of the blocks to different sections or paths is self-evident, whereas the allocation of some of the blocks is made for purposes of convenience and is not critical to understanding the operation of the device.

The mechanical assembly 104 comprises a motor 106 for spinning the DVD 102 and a pickup assembly 108 that is adapted to be moved over the spinning disc. A laser on the pickup assembly burns spots onto a spiral track on the disc or illuminates spots already burned onto the track for recording and playing back video and/or audio program material. For purposes of understanding the invention, it is irrelevant whether the disc is recordable on one or two sides, or in the event of a double-sided recording, whether the double-sided recording, or subsequent reading from the disc, takes place from the same side of the disc or from both sides. The pickup and the motor are controlled by a servo 110. The servo 110 also receives the Playback Signal of data read from the spiral track of the disc 102 as a first input. The Playback Signal is also an input to an error correction circuit 130, which can be considered part of the control section or part of the video/audio output processing path.

The control section 120 comprises a control central processing unit (CPU) 122 and a navigation data generation circuit 126. The control CPU 122 supplies a first input signal to the navigation data generation circuit 126 and the servo 110 supplies a second input signal to the navigation data generation circuit 126. The servo can also be considered part of the control section. The navigation data generation circuit 126 supplies a first input signal to the multiplexer (MUX) 154, which forms part of the video/audio input processing path 140.

In conventional recordable DVD devices, the navigation data generation circuit 126 will generate conventional navigation packet data to be stored on the disc with the video data. In accordance with the inventive arrangements, the navigation data generation circuit can supply certain additional information for inclusion in the navigation packet. The additional information can be used for improved performance for selected trick mode playback operations as shall subsequently be described in more detail.

The output of the MUX 154 is an input to an error correction coding circuit 128. The output of the error correction coding circuit 128 is a recordable input signal supplied to the pickup 108, which will be "burned" onto the spiral track of the disc 102 by the laser.

The control CPU 122 also preferably has access to the data contained in the track buffer 172 and record buffer 152 as shown in Fig. 1. CPU 122 can delete, modify, and reformat video data stored in the track buffer 172 and record buffer 152. Control and data interfaces are also preferably provided for permitting CPU 122 to control the operation of packet video encoder 144 and audio encoder 148. Suitable software or firmware is provided in memory for the conventional operations performed by control CPU 122. In addition, program routines for the advanced features 134 are provided for controlling CPU 122 in accordance with the invention as shall hereinafter be described in greater detail.

A control buffer 132 for viewer activatable functions indicates those functions presently available, namely play, record, reverse, fast forward, slow play, pause/play and stop. The pause is a counterpart to pause operation in a VCR, for example manually interrupting the play back of a prerecorded program or interrupting the recording of a viewed program to eliminate commercials from the recording. A separate buffer 136 is provided to receive commands for implementing the inventive arrangements taught herein.

The video/audio input processing path 140 is a signal processing circuit for converting a conventional television signal, for example NTSC or PAL, into digitized packet data, for example MPEG-1 or MPEG-2, for digital recording by the device 100. The input path 140 comprises an NTSC decoder 142 and video encoder, for example MPEG-1 or MPEG-2, 144 for video in, and comprises an audio analog-to-digital converter (A/D) 146 and an audio encoder, for example MPEG-1 or MPEG-2, 148. The digitized signals are combined in a multiplexer 150 and stored in a record buffer 152 until an entire packet has been constructed. As groups of audio and video data packets are created, they are combined in MUX 154 with appropriate navigation packets generated in the navigation data generation block 126. The packets are then sent on to the error correction coding circuit 128. Error correction coding circuit 128 can also be deemed to be part of the input path 140.

As a practical matter, the smallest addressable unit on the spiral track of a DVD is an ECC (error correction code) block of 16 sectors, where each sector includes 2048 bytes of user data. A group is a number of ECC blocks, for example 12. Each group of blocks represents approximately 0.5 seconds of combined video and audio program material. The amount of linear space along the spiral track needed to record a group of ECC blocks, for example 192 sectors, is defined herein as a segment of the spiral track. Accordingly, it can appear that the record buffer needs to be only large enough to store one segment of data. One segment of data can correspond, for example, to approximately 0.5 seconds of audio and video program material.

The output processing path 170 comprises error correction block 130 and a track buffer, or output buffer, 172, in which data read from the disc is assembled into packets for further processing. The packets are processed by conditional access circuit 174 that controls propagation of the packets through demultiplexer 176 and into respective paths for video and audio processing. Accordingly, it can also appear that the track buffer 172 needs to be only large enough to store one segment of data, also corresponding to approximately 0.5 seconds of audio and video program material.

The video is decoded by decoder 178, for example from MPEG-1 or MPEG-2, and encoded as a conventional television signal, for example NTSC or PAL. The audio is decoded by circuit 182, for example from MPEG-1 or MPEG-2, and converted to analog form by audio digital-to-analog (D/A) converter 184. A PCI buffer 190 and PCI decoder 192 can be provided for decoding presentation control information contained in navigation packets contained on the disc. The output processing path 170 can be deemed to include the error correction circuit 130, as noted.

DSI buffer 186 is provided for receiving disc search information (DSI) contained within the navigation packets. The DSI decoder is used for decoding the DSI information contained within navigation packets which shall be described in more detail below.

Notably, the present invention can be realized in hardware, software, or a combination of hardware and software. Machine readable storage according to the present invention can be realized in a centralized fashion in one computer system, for example the control CPU 122, or in a distributed fashion where different elements are spread across several interconnected computer systems. Any kind of computer system or other apparatus adapted for carrying out the methods described herein is acceptable.

Specifically, although the arrangement as described herein, which can be used with the invention, contemplates the control CPU 122 of Fig. 1, a typical combination of hardware and software could be a general purpose computer system with a computer program that, when being loaded and executed, controls the computer system and a DVD recording system similar to the control section 120 of Fig. 1 such that it carries out the methods described herein. The arrangement or its functions can also be embedded in a computer program product which comprises all the features enabling the implementation of the methods described herein, and which when loaded in a computer system is able to carry out these methods.

A computer program in the present context can mean any expression, in any language, code or notation, of a set of instructions intended to cause a system having an information processing capability to perform a particular function either directly or after either or both of the following: (a) conversion to another language, code or notation; and (b) reproduction in a different material form. The invention disclosed herein can be a method embedded in a computer program which can be implemented by a programmer using commercially available development tools for operating systems compatible with the control CPU 122 described above.

### DVD Media

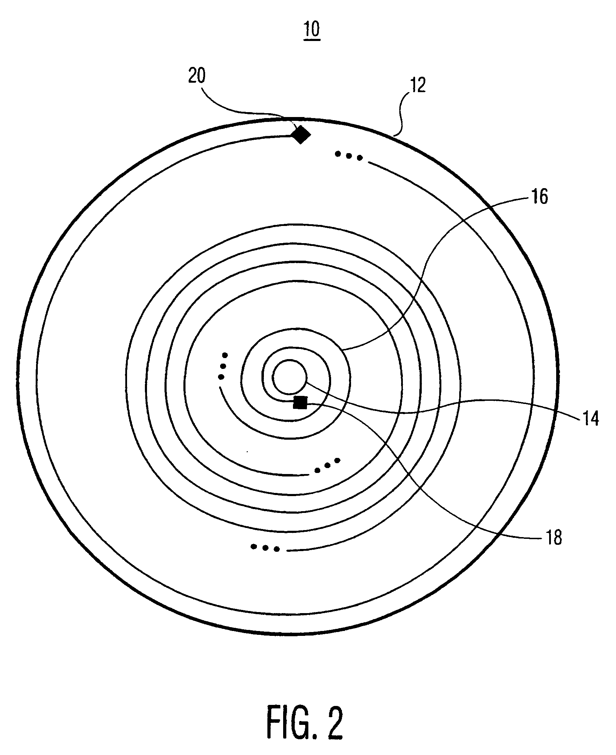

For purposes of illustrating arrangements for use with the invention, program material can be recorded onto a rewritable DVD and played back from a rewritable DVD. A rewritable DVD 10 shown in Fig. 2 is suitable for use as disc 102 in device 100. The disc 10 is formed by a flat, round plastic plate-like member 12. The re-writable DVD can consist of two substrates bonded together by an adhesive layer forming a 1.2mm thick disk. A center hole 14 can be formed in the disk so that a gripping device of the motor 106 of Fig. 1 can securely grip the disk and control the angular motion of the same.

The direction of recording on the track is typically outwardly along a spiral track 16, from a smaller radius part of the spiral to a larger radius part of the spiral. The several series of three large dots (_ _ _) denote portions of the track not shown in the drawing. As a result, the beginning of the spiral track is deemed to be near the hole 14, and is denoted by square 18. The end of the spiral is deemed to end near the rim, and is denoted by diamond 20. Those skilled in the art generally accept defining the beginning and end of the spiral as noted. Certain advanced features useful with the invention utilize backward recording, that is, from a larger radius part of the spiral to a smaller radius part of the spiral. The track can also have a side-to-side wobble, not shown in the drawing, to accommodate media type indexing. Due to difficulties of scale only portions of the track 16 are shown, and these are shown in greatly enlarged scale.

Each nearly circular, radially concentric section of the spiral is sometimes referred to as a track, but this terminology is not commonly accepted as having that specific meaning. In CD-ROM's, for example, the term track is also used to refer to that portion of the spiral track that contains a single audio song, or other selection, and the same may or may not become common for DVD's.

The arrangements have been described herein relative to recordable DVD media. Those skilled in the art will appreciate, however, that the invention is not limited in this regard. Rather, the improvements to DVD navigation information for improved trick modes as described herein can be used with any type of disc media, including but not limited to DVD-R type media.

### DVD Data Structures

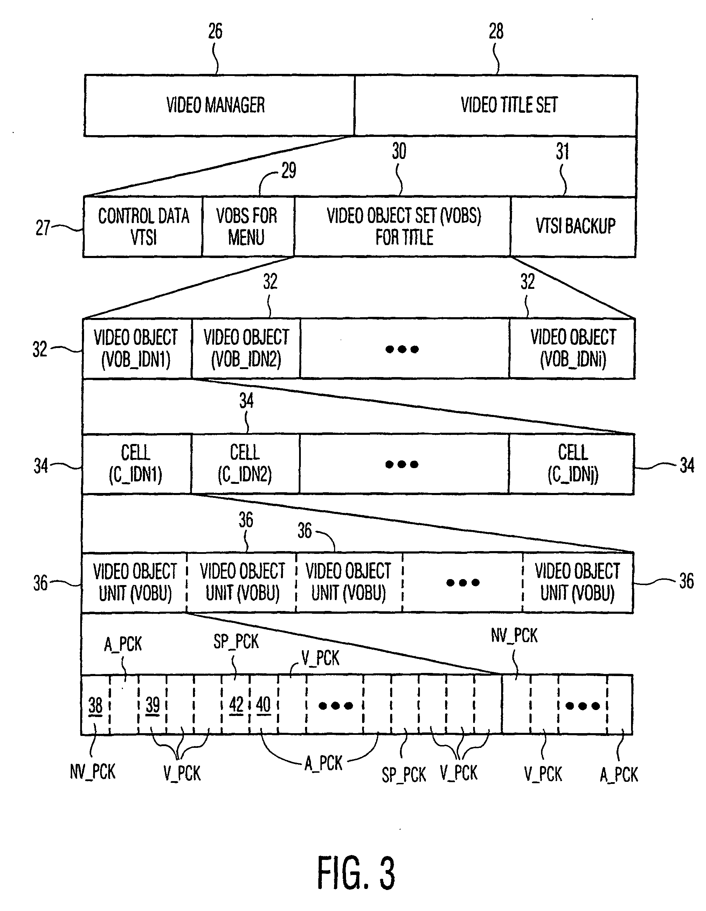

As shown in Fig. 3, each DVD contains a video manager 26 and video title set (VTS) 28. The VTS includes video title set information (VTSI) 27, an optional video object set for menu 29, one or more VOBS for title 30 which contains the actual title content, and a VTSI backup 31. Each VOBS 30 is comprised of a plurality of video objects 32. Each video object 32 includes a plurality of cells 34. Each VOBS also includes a collection of pointers to cells. In this way, the VOBS data links cells together and indicates in what order the programs or cells are to be played. Cells within a particular VOBS can be flagged for play in any desired order. For example, they can be played sequentially or randomly.

Each cell includes a plurality of VOBUs 36. Each of the VOBUs 36 in which the video content of the disc resides typically contains 0.4 to 1.0 seconds of presentation material. Each VOBU 36 is a sequence of data packs in recording order. Each VOBU starts with exactly one navigation pack (NV_PCK) 38 and could encompass all of the following kinds of packs, including video packs (V_PCK) 39, audio packs (A_PCK) 40 and sub-picture packs (SP_PCK) 42. Each VOBU is nominally comprised of one group of pictures (GOP).

A subpicture is a graphic bitmap overlay which is used in DVD-Video to create subtitles, karaoke lyrics, menu highlighting effects and so on. One or more subpicture packs (SP_PCK) 42 can be included in each VOBU.

### Fading And Mixing Features For A DVD Recorder

DVD fading and mixing are good features for recordable DVD, such as DVD-RW, DVD-RAM, DVD + RW, etc. A mixing and fading feature allows consumers to make high quality home video. Video fading can be done by inserting a subpicture or inserting a fading flag in DVD bit stream. The former technique, using altered DVD bit streams, will work on present DVD players. The latter technique, using a fading flag, will not work on present DVD players. The inventive arrangements as described herein include methods for fading operations using the former technique.

Accordingly, a subpicture is used to create the appearance that a video or still picture is fading in and fading out. A full screen subpicture is overlaid on a video, the video fades out when the subpicture is fading in, and the video fades in when the subpicture is fading out. This approach can be used for a video bit stream completely fading out and then another video bit stream starting to fade in. The two videos do not have overlap.

### Recording Subpictures on Disc

According to one embodiment, the fading sequence can be stored directly on the disc. If this approach is used, extra space is required for at least two subpicture units. One of the subpicture units is provided for fading in and the other for fading out. Advantageously, if the fading effect is stored on the disc then the disc can playback on any DVD player with the fading effect. For example, a DVD recorder can record a fading-in subpicture near the end of a cell and a fading-out subpicture at the beginning of a next cell. The fading can be easily added or deleted by modifying the subpicture only, without altering the video bit stream representing the main picture. The subpicture overlay can cause a transition from transparent to solid by changing the contrast.

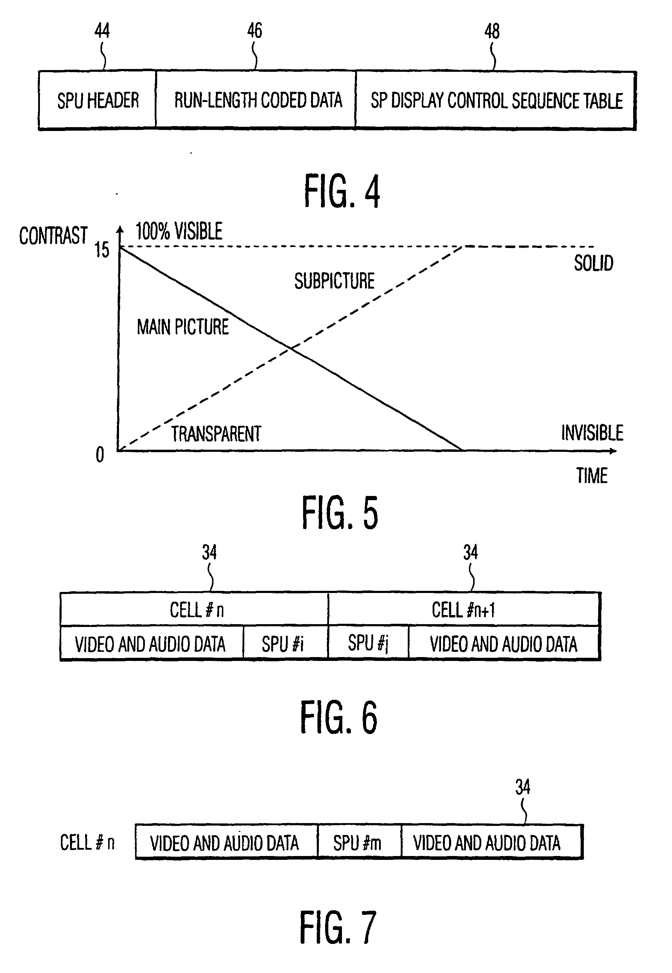

The subpicture is encoded into a subpicture unit (SPU) as shown in Fig. 4. The SPU is contained within a subpicture pack (SP_PCK) 42 as previously described relative to Fig. 3. The SPU header 44 defines the SPU size and the start address of the subpicture (SP) display control sequence table 48. The run-length coded data (or pixel data) 46 normally has two fields: top field and bottom field. The SP display control sequence table 48 defines: display area; display time; contrast or transparency; and, color. It is known to those skilled in the art that a sequence of display control commands can be used to cause the subpicture to fade.

According to the inventive arrangements, a full screen subpicture can be overlaid on a main picture. Subsequently, if the subpicture contrast is changed from transparent to solid (opaque), the main picture is changed from completely visible to completely invisible. Suitable subpicture packs for implementing the foregoing can be added on the disc during the recording process as shown in Fig. 6. The recording process can add the subpicture fading blocks each time the pause, record, or stop buttons are pressed, for example. This advantageously places the subpicture blocks within the recorded segments to help aid later editing.

Fading between cells 34 can be accomplished by adding suitable subpicture packs 42 comprising subpicture units (SPU), to cell number n and cell number n + 1 as shown in Fig. 6. As illustrated therein, SPU # i and SPU # j are added for fading. These SPUs can be added in response to appropriate user commands which can be entered by means of the advanced features buffer 136. Alternatively, such SPUs can be added automatically each time the user selects any of the pause, stop or record commands by means of feature buffer 132. As shown in Fig. 7, fading within a cell only requires one SPU which has been configured so that it fades in at first and then fades out in the second half as shown in Fig. 7. According to a preferred embodiment, the amount of time required for fading in and fading out can be determined by a default setting or can be selected by a user. The SPU's that are used for fading can be spread over several video object units if the fade occurs over a period comprising more than one sector.

### DVD Device Fading

Recording subpicture packs on disc is suitable for some types of editing but also suffers from certain disadvantages. Adding such data after the disc has already been recorded can be difficult because there may not be space available for inserting the new subpicture packs. According to an alternative arrangement, rather than adding subpictures on the disc, a DVD player can be designed to implement the fading function by inserting fading sub-pictures at playback time. A fading-in subpicture and a fading-out subpicture can be inserted a few seconds before the end of the first video bit stream and at the beginning of the second video bit stream, respectively.

A flag for fading in and a flag for fading out can be used to indicate if a particular cell needs fading in or fading out. Fading start time and end time can be indicated in the navigation data, so a player can properly insert subpicture units at certain positions when playing back. The DVD device implemented fading is advantageous as it permits fading to be added or deleted from a presentation without the need to add subpicture packs to existing data which has been recorded on disc.

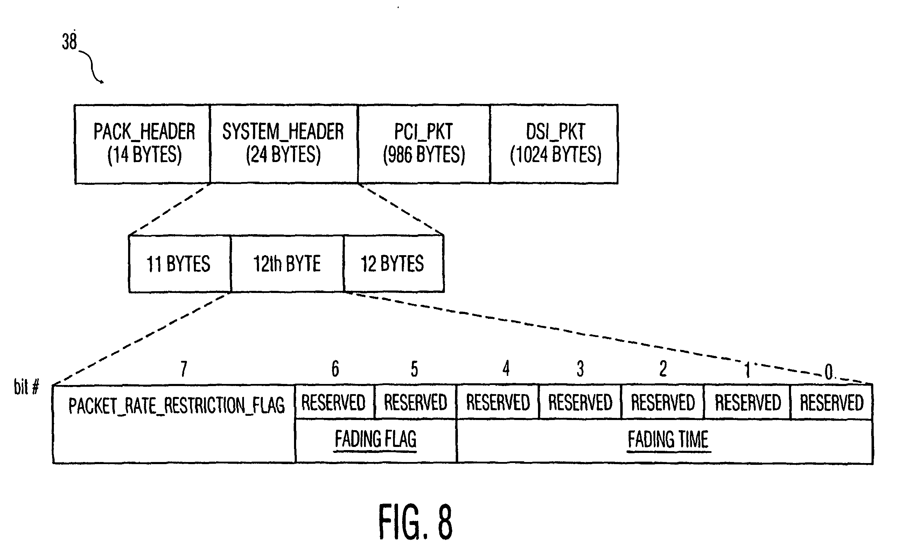

The foregoing process can be implemented by the DVD player by using a fading flag in navigation packs. Two reserved bits in system header of a navigation pack can be used as fading flags as shown in Fig. 8. The values for bits 6 and 5 are shown in the following Table.

| Bit 6 | Bit 5 | | |
|---|---|---|---|
| 1 | 1 | B: | No fading is implemented. |
| 0 | 1 | B: | A fading-out subpicture should be inserted in this VOBU when playing back. The fading-out time is defined in the following five bits of this byte. |
| 1 | 0 | B: | A fading-in subpicture should be inserted in this VOBU when playing back. The fading-in time is defined in the following five bits of this byte. |
| 0 | 0 | B: | This code is reserved and should not be used. |

Fading can also be accomplished at playback time by changing brightness of a decoded picture that is to be displayed. Fading start time and end time can be indicated in the navigation data as described above, so a player can properly adjust picture brightness at certain positions when playing back.

While the DVD device implemented fading has certain advantages, it does have one drawback. In particular, this approach cannot be used on existing DVD players which have not been designed to accommodate the fade feature in the manner described.

## Claims

1. Method for providing a fade effect on video data when recording on an optical medium (10) in an MPEG format recordable media player (100), which fade effect is carried out when replaying from said optical medium in a said recordable media player, said method including the steps of :
- providing (120, 140) a bitstream including video data, which bitstream includes a first cell (34, #n) or video data segment and a second cell (34, #n+1) or video data segment,
**characterised by**:
- inserting (122), in response to a program transition that takes place between said first and second video segments or cells, a first full-screen-subpicture data pack (SPU#i, 42) into said first video data segment or cell at a location adjacent to said program transition and a second full-screen-subpicture data pack (SPU#j, 42) into said second video data segment or cell at a location adjacent to said program transition, wherein contrast data (48) are included in said first and second full-screen-subpicture data packs such that upon replay from said optical medium
the contrast of said first full-screen-subpicture data changes from a transparent state to an opaque state so as to provide a fade-out effect for the video data contained in said first video data segment or cell, and the contrast of said second full-screen-subpicture data changes from an opaque state to a transparent state so as to provide a fade-in effect for the video data contained in said second video data segment or cell;
- recording (108, 128, 154) on said optical medium a bitstream including said first video data segment or cell with said inserted first full-screen-subpicture data pack, and said second video data segment or cell with said inserted second full-screen-subpicture data pack.

2. Method for providing a fade effect on video data when recording on an optical medium (10) in an MPEG format recordable media player (100), which fade effect is carried out when replaying from said optical medium in a said recordable media player, said method including the steps of :
- providing (120, 140) a bitstream including video data, which bitstream includes a cell (34, #n) including video data in which a program transition occurs between a first and a second portion of that cell,
**characterised by:**
- inserting (122) a full-screen-subpicture data pack (SPU#m, 42) into said cell at a location adjacent to said program transition, wherein contrast data (48) for said full-screen-subpicture data are included in said data pack such that upon replay from said optical medium the contrast of said full-screen-subpicture data changes from a transparent state to an opaque state and from an opaque state to a transparent state so as to provide a fade-out effect for the video data contained in said first portion of said cell and a fade-in effect for the video data contained in said second portion of said cell;
- recording (108, 128, 154) on said optical medium a bitstream including said cell with said inserted full-screen-subpicture data pack.

3. Method according to claim 1 or 2, wherein said full-screen-subpicture data pack or packs, respectively, is/are provided (122) automatically in response to at least one of a user command to begin recording, pause recording, and stop recording.

4. Method according to one of claims 1 to 3, wherein said MPEG format recordable media player (100) is a DVD-R, DVD-RAM, DVD-RW or DVD+RW player.

5. System for providing a fade effect on video data when recording on an optical medium (10) in an MPEG format recordable media player (100), which fade effect is carried out when replaying from said optical medium in a said recordable media player, said system including:
- means (120, 140) for providing a bitstream including video data, which bitstream includes a first cell (34, #n) or video data segment and a second cell (34, #n+1) or video data segment,
**characterised by**:
- means (122) being adapted for inserting, in response to a program transition that takes place between said first and second video segments or cells, a first full-screen-subpicture data pack (SPU#i, 42) into said first video data segment or cell at a location adjacent to said program transition and a second full-screen-subpicture data pack (SPU#j, 42) into said second video data segment or cell at a location adjacent to said program transition, wherein contrast data (48) are included in said first and second full-screen-subpicture data packs such that upon replay from said optical medium the contrast of said first full-screen-subpicture data changes from a transparent state to an opaque state so as to provide a fade-out effect for the video data contained in said first video data segment or cell, and the contrast of said second full-screen-subpicture data changes from an opaque state to a transparent state so as to provide a fade-in effect for the video data contained in said second video data segment or cell;
- recording means (108, 128, 154) which record on said optical medium a bitstream including said first video data segment or cell with said inserted first full-screen-subpicture data pack, and said second video data segment or cell with said inserted second full-screen-subpicture data pack.

6. System for providing a fade effect on video data when recording on an optical medium (10) in an MPEG format recordable media player (100), which fade effect is carried out when replaying from said optical medium in a said recordable media player, said system including:
- means (120, 140) for providing a bitstream including video data, which bitstream includes a cell (34, #n) including video data in which a program transition occurs between a first and a second portion of that cell,
**characterised by:**
- means (122) being adapted for inserting a full-screen-subpicture data pack (SPU#m, 42) into said cell at a location adjacent to said program transition, wherein contrast data (48) for said full-screen-subpicture data are included in said data pack such that upon replay from said optical medium the contrast of said full-screen-subpicture data changes from a transparent state to an opaque state and from an opaque state to a transparent state so as to provide a fade-out effect for the video data contained in said first portion of said cell and a fade-in effect for the video data contained in said second portion of said cell;
- recording means (108, 128, 154) which record on said optical medium a bitstream including said cell with said inserted full-screen-subpicture data pack.

7. System according to claim 5 or 6, wherein said full-screen-subpicture data pack or packs, respectively, is/are provided (122) automatically in response to at least one of a user command to begin recording, pause recording, and stop recording.

8. System according to one of claims 5 to 7, wherein said MPEG format recordable media player (100) is a DVD-R, DVD-RAM, DVD-RW or DVD+RW player.

## Patentansprüche

1. Verfahren zum Erzeugen eines Überblend-Effekts bei Videodaten bei Aufzeichnung auf ein optisches Medium (10) in einem Spieler (100) für in einem MPEG-Format aufzeichenbare Medien, wobei der Überblend-Effekt ausgeführt wird, wenn in dem Spieler für in einem MPEG-Format aufzeichenbare Medien das optische Medium abgespielt wird, und wobei das Verfahren die Schritte enthält:
- Erzeugen (120, 140) eines Videodaten enthaltenden Bitstroms, der eine erste Zelle (34, #n) oder Videodaten-Segment und eine zweite Zelle (34, #+1) oder Videodaten-Segment enthält, **gekennzeichnet durch**
- Einfügen (122) als Reaktion auf einen Programmübergang, der zwischen den ersten und zweiten Videosegmenten oder Zellen stattfindet, einen ersten Vollbild-Schirm-Unterbild-Datenpack (SPU #i, 42) in das erste Videodaten-Segment oder die Zelle an einem Ort, der dem Programmübergang benachbart ist, wobei Kontrastdaten (48) in dem ersten und zweiten Vollbild-Schirm-Unterbild-Datenpack so enthalten sind, dass sich beim Abspielen des optischen Mediums der Kontrast der ersten Vollbild-Schirm-Unterbilddaten von einem transparenten Zustand in einen undurchsichtigen Zustand ändert, um so einen Ausblend-Effekt für die in dem ersten Video-Datensegment oder der ersten Zelle enthaltenen Videodaten zu erzeugen, und der Kontrast der zweiten Vollbild-Schirm-Unterbilddaten sich von einem undurchsichtigen Zustand in einen transparenten Zustand ändert, um so einen Einblend-Effekt für die in dem zweiten Video-Datensegment oder der zweiten Zelle enthaltenen Videodaten zu erzeugen;
- Aufzeichnen (108, 128, 154) eines Bitstroms auf das optische Medium, der das erste Video-Datensegment oder die erste Zelle mit dem eingefügten ersten Vollbild-Schirm-Unterbild-Datenpack und das zweite Video-Datensegment oder die zweite Zelle mit dem eingefügten zweiten Vollbild-Schirm-Unterbild-Datenpack enthält.

2. Verfahren zum Erzeugen eines Überblend-Effekts bei Videodaten bei Aufzeichnung auf ein optisches Medium (10) in einem Spieler (100), wobei der Überblend-Effekt ausgeführt wird, wenn in dem Spieler für in einem MPEG-Format aufzeichenbare Medien das optische Medium abgespielt wird, wobei das Verfahren die Schritte enthält:
- Erzeugen (120, 140) eines Videodaten enthaltenden Bitstroms, der eine Zelle (34, #n) mit Videodaten enthält, in denen ein Programmübergang zwischen einem ersten und einem zweiten Teil der Zelle auftritt; **gekennzeichnet durch**:
- Einfügen (122) eines Vollbild-Schirm-Unterbild-Datenpacks (SPU #m, 42) in die Zelle an einem Ort neben dem Programmübergang, wobei Kontrastdaten (48) für die Vollbild-Schirm-Unterbild-Daten in dem Datenpack so enthalten sind, dass beim Abspielen des optischen Mediums der Kontrast der Vollbild-Schirm-Unterbild-Daten sich von einem transparenten Zustand in einen undurchsichtigen Zustand und von einem undurchsichtigen Zustand in einen transparenten Zustand ändert, um so einen Ausblend-Effekt für die in dem ersten Teil der Zelle enthaltenen Videodaten und einen Einblend-Effekt für die in dem zweiten Teil der Zelle enthaltenen Videodaten zu erzeugen;
- Aufzeichnen (108, 128, 154) eines Bitstroms auf das optische Medium, der die Zelle mit dem eingefügten Vollbild-Schirm-Unterbild-Datenpack enthält.

3. Verfahren nach Anspruch 1 oder 2, bei dem der Vollbild-Schirm-Unterbild-Datenpack bzw. Datenpacks automatisch als Reaktion auf wenigstens einen der Benutzerbefehle, eine Aufzeichnung zu beginnen, eine Aufzeichnung zu unterbrechen und eine Aufzeichnung zu beenden, erzeugt wird/werden (122).

4. Verfahren nach einem der Ansprüche 1 bis 3, bei dem der Spieler (100) für in einem MPEG-Format aufzeichenbare Medien ein DVD-R-, DVD-RAM-, DVD-RW- oder DVD-+RW-Spieler ist.

5. System zum Erzeugen eines Überblend-Effektes bei Videodaten bei Aufzeichnung auf ein optisches Medium (10) in einem Spieler (100) für in einem MPEG-Format aufzeichenbare Medien, wobei der Überblend-Effekt ausgeführt wird, wenn in dem Spieler für in einem MPEG-Format aufzeichenbare Medien das optische Medium abgespielt wird, wobei das System enthält:
- Mittel (120, 140) zur Erzeugung eines Videodaten enthaltenden Bitstroms, der eine erste Zelle (34, #i) oder Video-Datensegment und eine zweite Zelle (34, #n+1) oder Video-Datensegment enthält, **gekennzeichnet durch**:
- Mittel (122) zum Einfügen als Reaktion auf einen Programmübergang, der zwischen den ersten und zweiten Video-Segmenten oder Zellen stattfindet, einen ersten Vollbild-Schirm-Unterbild-Datenpack (SPU #i, 42) in das erste Video-Datensegment oder die Zelle an einem Ort, der dem Programmübergang benachbart ist, und einen zweiten Vollbild-Schirm-Unterbild-Datenpack (SPU #j, 42) in das zweite Video-Datensegment oder die Zelle an einem Ort, der dem Programmübergang benachbart ist, wobei Kontrastdaten (48) in dem ersten und zweiten Vollbild-Schirm-Unterbild-Datenpack so enthalten sind, dass sich beim Abspielen des optischen Mediums der Kontrast der ersten Vollbild-Schirm-Unterbild-Daten von einem transparenten Zustand in einen undurchsichtigen Zustand ändert, um so einen Ausblend-Effekt für die in dem ersten Video-Datensegment oder der ersten Zelle enthaltenen Videodaten zu erzeugen, und der Kontrast der zweiten Vollbild-Schirm-Unterbild-Daten sich von einem undurchsichtigen Zustand in einen transparenten Zustand ändert, um so einen Einblend-Effekt für die in dem zweiten Video-Datensegment oder der zweiten Zelle enthaltenen Videodaten zu erzeugen;
- Aufzeichnungsmittel (108, 128, 154), die einen Bitstrom auf das optische Medium aufzeichnen, der das erste Video-Datensegment oder die erste Zelle mit dem eingefügten ersten Vollbild-Schirm-Unterbild-Datenpack und das zweite Video-Datensegment oder die zweite Zelle mit dem eingefügten zweiten Vollbild-Schirm-Unterbild-Datenpack enthält.

6. System zum Erzeugen eines Überblend-Effekts bei Videodaten bei Aufzeichnung auf ein optisches Medium (10) in einem Spieler (100) für in einem MPEG-Format aufzeichenbare Medien, wobei der Überblend-Effekt ausgeführt wird, wenn in dem Spieler für in einem MPEG-Format aufzeichenbare Medien das optische Medium abgespielt wird, wobei das System enthält:
- Mittel (120, 140) zum Erzeugen eines Videodaten enthaltenden Bitstroms, der eine Zelle (34, #n) mit Videodaten enthält, in denen ein Programm-Übergang zwischen einem ersten und einem zweiten Teil der Zelle auftritt, **gekennzeichnet durch**:
- Mittel (122) zum Einfügen eine Vollbild-Schirm-Unterbild-Datenpacks (SPU #m, 42) in die Zelle an einem Ort neben dem Programm-Übergang, wobei Kontrastdaten (48) für die Vollbild-Schirm-Unterbild-Daten in dem Datenpack so enthalten sind, dass beim Abspielen des optischen Mediums der Kontrast der Vollbild-Schirm-Unterbild-Daten sich von einem transparenten Zustand in einen undurchsichtigen Zustand und von einem undurchsichtigen Zustand in einen transparenten Zustand ändert, um so einen Ausblend-Effekt für die in dem ersten Teil der Zelle enthaltenen Videodaten und einen Einblend-Effekt für die in dem zweiten Teil der Zelle enthaltenen Videodaten zu erzeugen;
- Aufzeichnungsmittel (108, 128, 154), die einen Bitstrom auf dem optischen Medium aufzeichnen, der die Zelle mit dem eingefügten Vollbild-Schirm-Unterbild-Datenpack enthält.

7. System nach Anspruch 5 oder 6, bei dem der Vollbild-Schirm-Unterbild-Datenpack bzw. Datenpacks automatisch als Reaktion auf wenigstens einen der Benutzerbefehle, eine Aufzeichnung zu beginnen, eine Aufzeichnung zu unterbrechen und eine Aufzeichnung zu beenden, erzeugt wird/werden (122).

8. System nach einem der Ansprüche 5 bis 7, bei dem der Spieler (100) für in einem MPEG-Format aufzeichenbare Medien ein DVD-R, DVD-RAM-, DVD-RW- oder DVD+RW-Spieler ist.

## Revendications

1. Procédé pour fournir un effet de fondu sur des données vidéo lors de l'enregistrement sur un support optique (10) dans un lecteur de supports inscriptibles au format MPEG (100), lequel effet de fondu étant réalisé lors de la lecture à partir dudit support optique dans undit lecteur de supports inscriptibles, ledit procédé comprenant les étapes suivantes :
- mise à disposition (120,140) d'un flux binaire comprenant des données vidéo, lequel flux binaire comprenant une première cellule (34, #n) ou un premier segment de données vidéo et une seconde cellule (34, #n+1 ) ou un second segment de données vidéo,
**caractérisé par :**
- l'insertion (122), en réponse à une transition de programme s'effectuant entre lesdits premier et second segments vidéo ou lesdites première et seconde cellules, d'un premier paquet de données de sous-images en plein écran (SPU#i, 42) dans ledit premier segment de données vidéo ou ladite première cellule à un emplacement adjacent à ladite transition de programme et d'un second paquet de données de sous-images en plein écran (SPU#j, 42) dans ledit second segment de données vidéo ou ladite seconde cellule à un emplacement adjacent à ladite transition de programme où les données de contraste (48) sont comprises dans lesdits premier et second paquets de données de sous-images en plein écran de sorte que lors de la lecture à partir dudit support optique,
le contraste desdites premières données de sous-images en plein écran passe d'un état transparent à un état opaque de façon à fournir un effet de fermeture en fondu pour les données vidéo contenues dans ledit premier segment de données vidéo ou ladite première cellule, et le contraste desdites secondes données de sous-images en plein écran passe d'un état opaque à un état transparent de façon à fournir un effet d'ouverture en fondu pour les données vidéo contenues dans ledit second segment de données vidéo ou ladite seconde cellule;
- l'enregistrement (108, 128, 154) sur ledit support optique d'un flux binaire comprenant ledit premier segment de données vidéo ou ladite première cellule avec ledit premier paquet de données de sous-images en plein écran inséré, et ledit second segment de données vidéo ou ladite seconde cellule avec ledit second paquet de données de sous-images en plein écran inséré.

2. Procédé pour fournir un effet de fondu sur des données vidéo lors de l'enregistrement sur un support optique (10) dans un lecteur de supports inscriptibles au format MPEG (100), lequel effet de fondu étant réalisé lors de la lecture à partir dudit support optique dans undit lecteur de supports inscriptibles, ledit procédé comprenant les étapes suivantes :
- mise à disposition (120,140) d'un flux binaire comprenant des données vidéo, lequel flux binaire comprenant une cellule (34, #n) qui comporte des données vidéo dans lesquelles une transition de programme intervient entre une première et une seconde partie de cette cellule,
**caractérisé par :**
- l'insertion (122) d'un premier paquet de données de sous-images en plein écran (SPU#i, 42) dans ladite cellule à un emplacement adjacent à ladite transition de programme où les données de contraste (48) pour lesdites données de sous-images en plein écran sont comprises dans ledit paquet de données de sorte que lors de la lecture à partir dudit support optique le contraste desdites données de sous-images en plein écran passe d'un état transparent à un état opaque et d'un état opaque à un état transparent de façon à fournir un effet de fermeture en fondu pour les données vidéo contenues dans ladite première partie de ladite cellule et un effet d'ouverture en fondu pour les données vidéo contenues dans ladite seconde partie de ladite cellule ;
- l'enregistrement (108, 128, 154) sur ledit support optique d'un flux binaire comprenant ladite cellule avec ledit paquet de données de sous-images en plein écran inséré.

3. Procédé selon revendication 1 ou 2, dans lequel ledit paquet ou lesdits paquets de données de sous-images en plein écran est/sont automatiquement fourni(s) (122) respectivement en réponse à au moins une commande utilisateur visant à démarrer l'enregistrement, mettre en pause l'enregistrement et arrêter l'enregistrement.

4. Procédé selon l'une des revendications 1 à 3, dans lequel ledit lecteur de supports inscriptibles au format MPEG (100) est un lecteur de DVD-R, DVD-RAM, DVD-RW ou DVD+RW.

5. Système pour fournir un effet de fondu sur des données vidéo lors de l'enregistrement sur un support optique (10) dans un lecteur de supports inscriptibles au format MPEG (100), lequel effet de fondu étant réalisé lors de la lecture à partir dudit support optique dans undit lecteur de supports inscriptibles, ledit système comprenant :
- des moyens (120, 140) pour fournir un flux binaire comprenant des données vidéo, lequel flux binaire comprenant une première cellule (34, #n) ou un premier segment de données vidéo et une seconde cellule (34, #n+1) ou un second segment de données vidéo,
**caractérisé par** :
- des moyens (122) adaptés à l'insertion, en réponse à une transition de programme s'effectuant entre lesdits premier et second segments vidéo ou cellules, d'un premier paquet de données de sous-images en plein écran (SPU#i, 42) dans ledit premier segment de données vidéo ou ladite première cellule à un emplacement adjacent à ladite transition de programme et d'un second paquet de données de sous-images en plein écran (SPU#j, 42) dans ledit second segment de données vidéo ou ladite seconde cellule à un emplacement adjacent à ladite transition de programme où les données de contraste (48) sont comprises dans lesdits premier et second paquets de données de sous-images en plein écran de sorte que lors de la lecture à partir dudit support optique,
le contraste desdites premières données de sous-images en plein écran passe d'un état transparent à un état opaque de façon à fournir un effet de fermeture en fondu pour les données vidéo contenues dans ledit premier segment de données vidéo ou ladite première cellule, et le contraste desdites secondes données de sous-images en plein écran passe d'un état opaque à un état transparent de façon à fournir un effet d'ouverture en fondu pour les données vidéo contenues dans ledit second segment de données vidéo ou ladite seconde cellule;
- des moyens d'enregistrement (108, 128, 154) qui enregistrent sur ledit support optique un flux binaire comprenant ledit premier segment de données vidéo ou ladite première cellule avec ledit premier paquet de données de sous-images en plein écran inséré, et ledit second segment de données vidéo ou ladite seconde cellule avec ledit second paquet de données de sous-images en plein écran inséré.

6. Système pour fournir un effet de fondu sur des données vidéo lors de l'enregistrement sur un support optique (10) dans un lecteur de supports inscriptibles au format MPEG (100), lequel effet de fondu étant réalisé lors de la lecture à partir dudit support optique dans un dit lecteur de supports inscriptibles, ledit système incluant :
- des moyens (120,140) pour fournir un flux binaire comprenant des données vidéo, lequel flux binaire comprenant une cellule (34, #n) qui comporte des données vidéo dans lesquelles une transition de programme intervient entre une première et une seconde partie de cette cellule,
**caractérisé par :**
- des moyens (122) adaptés à l'insertion d'un premier paquet de données de sous-images en plein écran (SPU#i, 42) dans une cellule à un emplacement adjacent à ladite transition de programme dans laquelle les données de contraste (48) pour lesdites données de sous-images en plein écran sont comprises dans ledit paquet de données de sorte que lors de la lecture à partir dudit support optique le contraste desdites données de sous-images en plein écran passe d'un état transparent à un état opaque et d'un état opaque à un état transparent de façon à fournir un effet de fermeture en fondu pour les données vidéo contenues dans ladite première partie de ladite cellule et un effet d'ouverture en fondu pour les données vidéo contenues dans ladite seconde partie de ladite cellule ;
- des moyens d'enregistrement (108, 128, 154) qui enregistrent sur ledit support optique un flux binaire comprenant ladite cellule avec ledit paquet de données de sous-images en plein écran inséré.

7. Système selon la revendication 5 ou 6, dans lequel ledit paquet ou lesdits paquets de données de sous-images en plein écran est/sont automatiquement fourni(s) respectivement en réponse à au moins une commande utilisateur visant démarrer l'enregistrement, mettre en pause l'enregistrement et arrêter l'enregistrement.

8. Système selon l'une des revendications 5 à 7, dans lequel ledit lecteur de supports inscriptibles au format MPEG (100) est un lecteur de DVD-R, DVD-RAM, DVD-RW ou DVD+RW.
